Europäisches Patentamt

European Patent Office

Office européen des brevets

(19)

(11) Veröffentlichungsnummer : **0 208 067**
**B1**

# (12) EUROPÄISCHE PATENTSCHRIFT

(45) Veröffentlichungstag der Patentschrift :
**07.06.89**

(21) Anmeldenummer : **86104907.0**

(22) Anmeldetag : **10.04.86**

(51) Int. Cl.⁴ : $G\ 01\ J\ \ 5/04$

(54) **Vorrichtung zur Temperaturmessung an einem Konverter.**

(30) Priorität : **13.06.85 DE 3521190**

(43) Veröffentlichungstag der Anmeldung :
**14.01.87 Patentblatt 87/03**

(45) Bekanntmachung des Hinweises auf die Patenterteilung : **07.06.89 Patentblatt 89/23**

(84) Benannte Vertragsstaaten :
**AT BE CH DE FR GB IT LI LU NL SE**

(56) Entgegenhaltungen :
**DE--A-- 2 150 200**
**DE--C-- 964 991**
**US--A-- 3 161 499**

(73) Patentinhaber : **Hoesch Stahl Aktiengesellschaft**
**Rheinische Strasse 173**
**D-4600 Dortmund 1 (DE)**

(72) Erfinder : **Meininghaus, Fritz, Dr.**
**Helenenbergweg 28**
**D-4600 Dortmund 50 (DE)**
Erfinder : **Müller, Gerhard, Ing.**
**Grabenstrasse 26**
**D-4690 Herne 1 (DE)**
Erfinder : **Tappe, Wilhelm, Dr.**
**Wulfskamp 23**
**D-4600 Dortmund 16 (DE)**
Erfinder : **Kopineck, Hermann Josef, Prof. Dr. rer. nat.**
**Wildbannweg 36**
**D-4600 Dortmund 50 (DE)**

## Beschreibung

Die Erfindung betrifft eine Vorrichtung zum kontinuierlichen Messen der Temperatur der Stahlschmelze eines Konverters mit Hilfe eines Strahlungsmeßgerätes. Die Bestimmung der Temperatur ist für die Steuerung und Beendigung des Blasprozesses von entscheidender Bedeutung. Bisher konnte die genaue Temperatur an Konvertern nur mit Hilfe eines Thermoelementes bestimmt werden, das mit einer Lanze kurzzeitig in die Stahlschmelze getaucht wird. Das Thermoelement ist nur für wenige Sekunden brauchbar und wird durch die hohe Temperatur nach spätestens 10 Sekunden zerstört. Es muß für jede Messung ein neues Thermoelement an der Lanze befestigt werden. Wegen dieses Aufwandes wird die Temperatur während des Blasens nur in größeren Abständen gemessen.

Eine berührungslöse Messung der Temperatur mit Hilfe eines Strahlungsmeßgerätes ist nicht möglich, weil auf der Stahlschmelze eine dicke Schicht Schlacke schwimmt, deren Oberflächentemperatur niedriger als die Temperatur der Stahlschmelze ist, und außerdem wird die Messung noch durch Staub und heiße Abgase verfälscht.

Aus der DE-PS 1066039 und der DE-OS 2138540 sind eine rohrförmige Lanze oder eine durch die Wand des Schmelztiegels gehende Bohrung bekannt, an die sich anstelle eines Spektrometers in naheliegender Weise auch ein die Temperaturstrahlung der flüssigen Schmelze messendes Pyrometer anschließen ließe. Ein solches Gerät wäre nur für Schmelztiegel mit einer ruhigen Flüssigkeit einsetzbar. Es wäre für den Einsatz an einem Konverter völlig ungeeignet, weil durch den Blasvorgang stoßweise Flüssigkeitsbewegungen entstehen, durch die flüssiger Stahl in die Bohrung von relativ großem Durchmesser eindringt und sich dort erstarrend festsetzt. Dies kann auch nicht durch eine Erhöhung der Strömungsgeschwindigkeit des inerten Gases verhindert werden, weil das Gas dann noch stärker den Bereich der Mündung der Bohrung abkühlt und sich dort noch leichter erstarrende Schmelze festsetzt.

Außerdem würde durch das kühlende Gas auch die Schmelze direkt vor der Bohrung abgekühlt, was die Messung verfälschen würde.

Es ist die Aufgabe der Erfindung, einen in die Schmelze hineinragenden Kanal mit angebautem Strahlungsmeßgerät so zu gestalten, daß diese Vorrichtung auch bei einem blasenden Konverter einsetzbar ist und sich keine erstarrende Schmelze an der Mündung des Kanals festsetzt und die kühlende Wirkung des inerten Gases auf die Schmelze zu keinen Meßfehlern führt.

Diese Aufgabe wird durch die im kennzeichnenden Teil des Anspruchs 1 beschriebenen Maßnahmen gelöst. Weiterbildungen sind in den abhängigen Ansprüchen 2 bis 10 beschrieben.

Es hat sich überraschender Weise herausgestellt, daß kleine Düsen mit hoher Strömungsgeschwindigkeit des kühlenden Gases für die Messung geeignet sind. Ein Verwirbeln der Flüssigkeit unmittelbar vor der Düse sorgt vermutlich dafür, daß die vom Gas getroffenen oder abgekühlten Partikel weitgehend von nicht abgekühlten Partikeln umgeben werden, so daß die nicht abgekühlten Partikel die in den Kanal einfallende Strahlung zum größten Teil bestimmen. Durch das Verwirbeln vor der Düse können sich erstarrende Teile der Stahlschmelze nicht festsetzen, da diese vom Rand der Düse weggerissen und in die Stahlschmelze zurückgeblasen werden.

Die Temperatur kann mit einer einzigen Meßvorrichtung an verschiedenen Stellen des Schmelzbades und in verschiedener Höhe des Schmelzbades bestimmt werden, wenn die Vorrichtung an eine von oben in das Schmelzbad einführbare Lanze angebaut ist, die einen Kanal für die zu messende Strahlung enthält.

Es ist von Vorteil, wenn der Kanal für die Messung durch den Boden eines Konverters führt, in den « Rührgasdüsen » eingebaut sind. Der Kanal für die Messung kann selbst als « Rührgasdüse » wirken. Er kann aber auch mit einer geringeren Gasgeschwindigkeit als die « Rührgasdüsen » betrieben werden, wenn in seiner Nähe Rührgasdüsen eingebaut sind, die für eine ausreichende Durchwirbelung der Schmelze auch im Bereich des zu messenden Kanals sorgen.

Es ist wegen des sehr geringen Durchmessers und der großen Länge des Kanals schwierig, genügend Strahlung aus der Schmelze am Pyrometer zu empfangen. Aus diesem Grunde ist es von Vorteil, wenn die Strahlung durch eine Linse empfangen wird, die ungefähr ein Drittel der Dicke der Konverterwandung von der äußeren Oberfläche entfernt in den dort etwas verbreiterten Kanal eingebaut ist und die Strahlung über einen Lichtleiter zum Pyrometer geleitet wird, das außerhalb des Konverters angebracht ist. Der Durchmesser der optischen Linse und des Lichtleiters sollte nur so groß sein, daß die verbleibende freie Strömungsfläche größer oder gleich der Querschnittsfläche des dünneren Teils des Kanals ist.

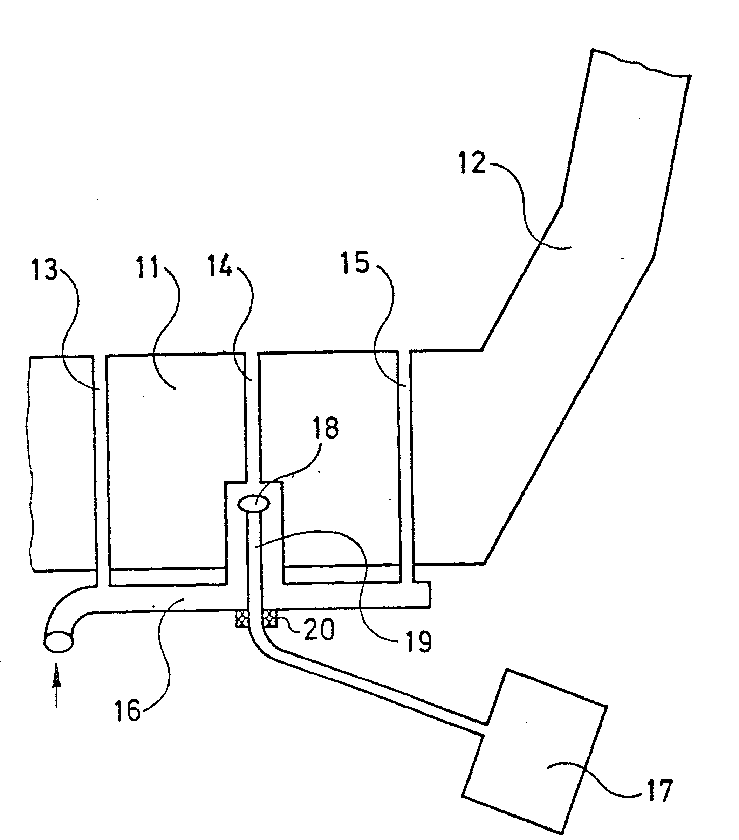

In der Figur ist ein Ausführungsbeispiel der Erfindung dargestellt, wobei vom Konverter nur der Boden 11 und der untere Teil der Seitenwand 12 dargestellt wurde. Im Boden 11 sind die Rührgasdüsen 13, 14 und 15 eingezeichnet, die vom Sammelrohr 16 das inerte Gas zugeführt bekommen. Die Rührgasdüse 14 dient gleichzeitig als Kanal zum Durchstrahlen für das Pyrometer 17. Die Strahlung fällt zunächst auf die Linse 18 und wird von dort in den Lichtleiter 19 eingestrahlt, der die Strahlung bis zum Pyrometer 17 leitet. Der Lichtleiter 19 verläßt das unter Gasdruck stehende Sammelrohr an einer Bohrung, die durch eine Dichtung 20 abgedichtet ist.

In einer etwas schlechteren Ausführungsform wäre die Strahlungsmessung auch möglich, wenn die Linse 18 und der Lichtleiter 19 fehlen und anstelle der Dichtung 20 dort ein durchsichtiges Fenster angebracht wäre und das Pyrometer 17 dort direkt unter dem Fenster installiert würde.

Der Kanal 14 mit dem Strahlungsmeßgerät kann in einer anderen Ausführungsform auch in eine von oben in die Stahlschmelze eintauchbare Lanze eingebaut werden.

## Patentansprüche

1. Vorrichtung zur Messung der Strahlung an einem Konverter mit einem Strahlungsmeßgerät (17), das am einen Ende eines geradlinig verlaufenden Kanals (14) zum Empfang der durch den Kanal fallenden Strahlung angeschlossen ist, während das andere Ende des Kanals in der flüssigen Strahlschmelze mündet und an diesem Ende ein inertes oder reaktionarmes Gas oder Gasgemisch mit Überdruck in die Stahlschmelze einströmt, dadurch gekennzeichnet, daß der Kanal (14) mindestens am in die Stahlschmelze mündenden Ende eine Querschnittsfläche hat, die nicht größer als 1 cm$^2$ ist und die Ausströmgeschwindigkeit des Gases oder Gasgemisches so groß ist, daß pro Minute mindestens 10 Gramm, bezogen auf einen Querschnitt von 1 mm$^2$ ausströmen, und an den Kanal als Strahlungsmeßgerät ein Temperaturstrahlungsmeßgerät (17) angeschlossen ist.

2. Vorrichtung nach Anspruch 1, dadurch gekennzeichnet, daß der Kanal (14) durch eine von oben in die Stahlschmelze eintauchbare Lanze führt.

3. Vorrichtung nach Anspruch 1, dadurch gekennzeichnet, daß der Kanal (14) durch die Wandung (12) des Konverters führt.

4. Vorrichtung nach Anspruch 1, dadurch gekenzeichnet, daß der Kanal durch den Boden (11) des Konverters führt.

5. Vorrichtung nach den Ansprüchen 1 bis 4, dadurch gekennzeichnet, daß der Kanal (14) aus einem dünnen Teil besteht, der der Schmelze zugewandt ist und dieser dünne Teil ca. 50 % bis 70 % der gesamten Kanallänge ausmacht und aus einer 4 bis 8 mm im Durchmesser betragenden Bohrung besteht und der übrige Teil des Kanals einen Durchmesser zwischen 7 bis 12 mm hat.

6. Vorrichtung nach den Ansprüchen 1, 4 und 5, dadurch gekennzeichnet, daß in der Nähe des Kanals (14) mit angeschlossenem Strahlungsmeßgerät (17) im Boden (11) des Konverters mindestens 3 weitere Düsen zum Einströmen eines Rührgases angebracht sind.

7. Vorrichtung nach den Ansprüchen 1 bis 6, dadurch gekennzeichnet, daß als Strahlungsmeßgerät (17) ein Strahlungspyrometer, insbesondere ein Quotienten- oder Teilstrahlungspyrometer angebracht ist.

8. Vorrichtung nach den Ansprüchen 1 bis 7, dadurch gekennzeichnet, daß im dickeren Teil des Kanals (14) ein Lichtleiter (19) eingebaut ist, an dessen Anfang eine Sammellinse (18) angebracht ist und dieses optische System auf den Öffnungsquerschnitt des Kanals (14) unter Ausblendung der Randbereiche ausgerichtet ist und der Lichtleiter (19) über ein druckdichtes Paßstück (20) aus der Zuführungsleitung (16) für das Gas oder Gasgemisch heraus — und zum Strahlungsmeßgerät (17) geführt ist.

9. Vorrichtung nach den Ansprüchen 1 bis 8, dadurch gekennzeichnet, daß das inerte Gas in den durchstrahlten Kanal (14) mit einem Druck einströmt, der höher als 5 bar ist.

10. Verfahren zum Betrieb der Vorrichtung zur Temperaturmessung nach den Ansprüchen 1 bis 9, dadurch gekennzeichnet, daß die Vorrichtung in größeren zeitlichen Abständen durch Vergleiche mit einer herkömmlichen Tauchtemperaturmessung geeicht wird.

## Claims

1. Device for measuring the temperature in a converter with a radiation measuring instrument (17), which is connected to one end of a rectlinear channel (14) to receive the radiation propagated through the channel, whereas the other end of the channel opens out into the liquid molten steel and an inert gas or a low reaction gas or gas mixture at excess pressure flows into the molten steel at this end, characterised in that the channel (14) has a cross sectional area that is not greater than 1 cm$^2$ at least at the end terminating at the molten steel and the discharge velocity of the gas or gas mixture is large enough to produce a flow of at least 10 gram per minute with repect to a cross section of 1 mm$^2$ and that a temperature radiation measuring instrument (17) is connected to the channel as radiation measuring instrument.

2. Device as in claim 1, characterised in that the channel (14) runs through a lance which can be immersed in the molten steel from the top.

3. Device as in claim 1, characterised in that the channel (14) runs through the wall (12) of the converter.

4. Device as in claim 1, characterised in that the channel runs through the bottom (11) of the converter.

5. Device as in claims 1 to 4 inclusive, characterised in that the channel (14) consists of a thin section, which faces the smelt and that this thin section forms approximately 50 % to 70 % of the overall length of the channel and consists of a hole with a diameter of 4 to 8 mm and the remaining section of the channel has a diameter of between 7 and 12 mm.

6. Device as in claims 1, 4 and 5, characterised in that there are 3 other nozzles for injecting a stirrer gas constructed in the bottom (11) of the converter close to the channel (14) with the connected radiation measuring instrument (17).

7. Device as in claims 1 to 6 inclusive, characterised in that the radiation measuring instrument (17) used is a radiation pyrometer, particularly a quotient or partial radiation pyrometer.

8. Device as in claim 1 to 7 inclusive, characterised in that a fibre optic cable (19) is fitted in the thicker section of the channel (14) with a collective focusing lens (18) attached at its beginning and that this optical system is positioned in the cross section of the hole of the channel (14) while masking the edge section and the fibre optic cable (19) is run via a pressuretight adapter (20) out of the feed pipe (16) for the gas or gas mixture and to the radiation measuring instrument (17).

9. Device as in claims 1 to 8 inclusive, characterised in that the inert gas flows into the irradiated channel (14) with a pressure in excess of 5 bar.

10. Procedure for operating the device for measuring the temperature as in claims 1 to 9 inclusive, characterised in that the device is calibrated at large time intervals by comparison with a conventional immersion temperature measurement.

## Revendications

1. Dispositif pour mesurer le rayonnement dans un convertisseur, au moyen d'un appareil de mesure du rayonnement (17), qui est relié à l'extrémité d'un conduit rectiligne (14) pour recevoir le rayonnement qui traverse le dit conduit, tandis que l'autre extrémité du conduit débouche dans une masse liquéfiée d'acier en fusion, et qu'à cette extrémité un gaz ou un mélange gazeux inerte ou faiblement réactif est envoyé sous surpression dans la masse d'acier en fusion, caractérisé en ce que le conduit (14) possède, au moins à l'extrémité qui débouche dans la masse d'acier en fusion, une surface en section transversale qui n'est pas plus grande qu'1 cm², et en ce que la vitesse de sortie du gaz ou du mélange gazeux est telle que, par minute, sort une quantité au moins égale à 10 grammes par rapport à une section transversale de 1 mm², et en ce qu'un appareil (17) de mesure du rayonnement thermique est fixé en tant qu'appareil de mesure du rayonnement, sur le canal.

2. Dispositif selon la revendication 1, caractérisé en ce que le conduit (14) mène à la masse d'acier en fusion, à travers une lance enfoncée par le haut dans la masse d'acier en fusion.

3. Dispositif selon la revendication 1, caractérisé en ce que le conduit (14) passe à travers la paroi (12) du convertisseur.

4. Dispositif selon la revendication 1, caractérisé en ce que le conduit passe à travers le fond (11) du convertisseur.

5. Dispositif selon les revendications 1 à 4, caractérisé en ce que le conduit (14) consiste en une partie fine, tournée vers la masse en fusion, faisant entre 50 et 70 % de la longueur totale du conduit, et possédant une forure d'un diamètre de 4 à 8 mm, tandis que le reste du conduit a un diamètre de 7 à 12 mm.

6. Dispositif selon les revendications 1, 4 et 5, caractérisé en ce que, au voisinage du conduit (14) avec l'appareil de mesure du rayonnement (17) au fond (11) du convertisseur, se placent au moins trois tuyères supplémentaires pour l'introduction d'un gaz d'agitation.

7. Dispositif selon les revendications 1 à 6, caractérisé en ce qu'il comprend un pyromètre à radiation comme appareil de mesure du rayonnement (17), en particulier un pyromètre à spectre partiel ou un pyromètre quotientmétrique.

8. Dispositif selon les revendications 1 à 7, caractérisé en ce que, dans la partie plus large du conduit (14), est incorporé un guide de lumière (19) qui, à son extrémité d'entrée, comprend une lentille convergente (18), et ce système optique est adapté à la section ouverte du canal (14) pour ne pas fermer la zone périphérique, et le guide de lumière (19) est relié à l'appareil de mesure du rayonnement (17) en passant par un raccord (20) résistant à la pression du conduit d'alimentation (16) en gaz ou en mélange gazeux (17).

9. Dispositif selon les revendications 1 à 8, caractérisé en ce que le gaz inerte est envoyé dans le conduit (14) traversé par le rayonnement sous une pression supérieure à 5 bar.

10. Procédé pour mettre en œuvre le dispositif de mesure thermique selon les revendications 1 à 9, caractérisé en ce que le dit dispositif est étalonné à des intervalles de temps plus long, par comparaison aux thermomètres plongeurs usuels.